# EUROPEAN PATENT APPLICATION

(11) **EP 4 285 724 A2**
(43) Date of publication of application: **06.12.2023**
(21) Application number: 23203617.8
(22) Date of filing: 22.05.2018
(51) Int. Cl.: A01P 1/00

(54) **LIQUID ACETYL RADICALS GENERATOR COMPOSITION**

(30) Priority: 22.05.2017 FR 1754507
(62) Divisional of application: 18729317.0
(71) Applicant: Ecolab USA Inc., Saint Paul, MN 55102 (US)
(72) Inventor: BERTHO, Jean Noel, SAINT PAUL, 55102 (US); TERRIER, Sébastien, SAINT PAUL, 55102 (US); RAUWEL, Gaétan, SAINT PAUL, 55102 (US)
(74) Representative: Plasseraud IP

(57) **Abstract**

The invention relates to a method of generating peracetic acid comprising combining N-acetylcaprolactam, an organic solvent, and a liquid perhydroxyl ions generator as well as the use of the thus generated peracteic acid.

## Description

The present invention relates to a new acetyl radicals generator composition particularly intended for preparing peracetic acid-based disinfectant compositions.

In a hospital environment, some surgical and medical instruments or equipment such as, for example, surgical instruments or endoscopy equipment, require high-level disinfection. This disinfection is often carried out using soaking baths, in which the instruments and equipment are immersed.

A particularly effective solution for such an application is marketed by the Applicant under the name Anioxyde 1000 and is disclosed in patent application WO 00/53011 A1. This product is composed of two distinct liquid compositions: an oxygen generator liquid base comprising hydrogen peroxide, on the one hand, and a liquid acetyl radicals generator comprising N-acetylcaprolactam solubilized in isopropanol, on the other hand. When the two liquids are mixed, the hydrogen peroxide reacts with the N-acetylcaprolactam in a perhydrolysis reaction and thus generates peracetic acid.

In addition to allowing fast and effective extemporaneous preparation of peracetic acid, this system allows full disinfection in five minutes. However, Anioxyde^{®} 1000 has a major disadvantage. N-acetylcaprolactam is not in fact stable during the time in solution. The lifetime of the acetyl radicals generator is thus only 12 months.

Therefore, a requirement exists for a liquid acetyl radicals generator composition for preparing a liquid peracetic acid-based disinfectant composition with a better lifetime compared to the prior art.

The Applicant is to be credited with having found, as a result of extensive research, the source of these stability problems. Indeed, it is particularly the isopropanol that is used as solvent that has a negative effect on the stability of the N-acetylcaprolactam.

Therefore, the invention firstly relates to a liquid acetyl radicals generator composition comprising N-acetylcaprolactam and an organic solvent, characterized in that the organic solvent is selected from propylene glycol ethers.

Surprisingly, the use of a propylene glycol ether instead of isopropanol allows the shelf life of the liquid acetyl radicals generator composition to be significantly increased. Thus, the composition according to the invention is preferably isopropanol free, and even aliphatic alcohol free in general. The term "propylene glycol ether" within the scope of the invention comprises monopropyl glycol ethers, dipropylene glycol ethers, tripropylene glycol ethers and their mixtures. Preferably, the organic solvent is selected from C1 to C4 linear or branched alkyl or alkoxy propylene glycol ethers, C1 to C4 linear or branched alkyl or alkoxy dipropylene glycol ethers, C1 to C4 linear or branched alkyl or alkoxy tripropylene glycol ethers and their mixtures, more preferably from dipropylene glycol monomethyl ether, monopropylene glycol mono-n-butyl ether, dipropylene glycol mono-n-butyl ether (butoxypropanol), tripropylene glycol monomethyl ether and their mixtures. A particularly significant increase in the shelf life has been obtained with tripropylene glycol monomethyl ether.

The N-acetylcaprolactam content of the acetyl radicals generator composition is advantageously from 30 % to 80 %, preferably from 40 % to 70 %, more preferably from 50 % to 65 % and more preferably approximately 60 % relative to the total weight of the composition.

The organic solvent content of the acetyl radicals generator composition is advantageously from 10 % to 60 %, preferably from 20 % to 50 %, more preferably from 25 % to 40 % and more preferably from 30 % to 35 % relative to the total weight of the composition.

The liquid acetyl radicals generator composition according to the invention can further comprise one or more surfactants. The one or more surfactants can be selected from non-ionic, anionic, amphoteric or cationic surfactants, with non-ionic surfactants being preferred. The one or more non-ionic surfactants particularly can be selected from alkoxylated and alkylpolyglucoside non-ionic surfactants. The alkoxylated non-ionic surfactants are advantageously selected from alkoxylated fatty alcohols, preferably ethoxylated and/or propoxylated, particularly polyalkoxylated fatty alcohols in which the polyalkoxylated part is composed of an OE-OP (ethylene oxide-proplyene oxide) copolymer block, and their mixtures. Commercial examples of such surfactants are those from the Genapol^{®} EP range marketed by Clariant (Muttenz, Switzerland), such as, for example, Genapol^{®} EP 2584 (mixture of C₁₂C₁₅ polyalkoxylated alcohols (8OE, SOP). With N-acetylcaprolactam being sensitive to hydrolysis, the surfactant advantageously is a surfactant with 100 % active material, i.e. water free.

The non-ionic surfactant content in the acetyl radicals generator composition according to the invention advantageously is from 1 % to 10 %, preferably from 2 % to 7 %, more preferably approximately 5 % by weight relative to the total weight of the composition.

The acetyl radicals generator composition according to the invention can further comprise an anti-corrosion agent such as benzotriazole, for example. However, the inventors have observed that benzotriazole had a negative influence on the stability of the composition according to the invention. It is for this reason that it is preferably benzotriazole free.

The acetyl radicals generator composition according to the invention can further comprise one or more coloring agents or color indicators.

The acetyl radicals generator composition according to the invention is particularly useful in combination with a liquid perhydroxyl ions generator composition. Therefore, the invention also relates to a kit for preparing a disinfectant composition containing peracetic acid, the kit comprising:
- in a first container, a liquid acetyl radicals generator composition as defined above; and
- in a second container, a liquid perhydroxyl ions generator composition comprising hydrogen peroxide.

The liquid perhydroxyl ions generator composition advantageously contains from 1 % to 7 %, preferably from 2 % to 5 %, more preferably from 2.5 % to 3.5 % and even more preferably approximately 3 % by weight relative to the total weight of the composition.

The liquid perhydroxyl ions generator composition advantageously is an aqueous solution of hydrogen peroxide.

The liquid perhydroxyl ions generator composition can further comprise stabilizing agents, particularly pH regulators, for stabilizing it over time while avoiding the decomposition of the hydrogen peroxide during storage. These stabilizing agents can be selected, for example, from mineral and organic bases such as, for example, alkali hydroxides, such as potassium or sodium hydroxide, and alkanolamines, such as monoethanolamine, diethanolamine and triethanolamine.

The liquid perhydroxyl ions generator composition can further comprise anti-corrosion agents. Suitable anti-corrosion agents particularly comprise phosphates, phosphonates, phosphoric esters and triazole derivatives such as benzotriazole.

The perhydroxyl ions generator composition can further comprise one or more additive(s), such as stabilizing agents like, for example, anti-oxidant agents or anti-UV agents. It can also comprise a coloring agent or colored indicator. This is of particular interest in the event that the acetyl radicals generator composition according to the invention does not contain coloring or color indicator.

When the acetyl radicals generator composition according to the invention is mixed with a perhydroxyl ions generator composition as described above, the N-acetylcaprolactam reacts with the hydrogen peroxide in a perhydrolysis reaction and thus generates peracetic acid. Therefore, the invention further relates to a method for preparing a disinfectant composition containing peracetic acid, in which:
- a liquid acetyl radicals generator composition is provided as defined above, particularly contained in a first container;
- a liquid perhydroxyl ions generator composition is provided as defined above, particularly contained in a second container; and
- the acetyl radicals generator composition and the perhydroxyl ions generator composition are mixed.

The disinfectant composition that is thus obtained is particularly useful for disinfecting, particularly by soaking, surgical and medical instruments and equipment. Therefore, the invention also relates to the use of the kit for preparing a disinfectant composition obtained according to the invention and to the disinfectant composition according to the method of the invention for disinfecting, particularly by soaking, surgical and medical instruments and equipment. The term "surgical and/or medical instruments and equipment" as used in the present application is to be broadly understood to be referring to the medical devices and all the other articles that are used in the medical, dental, pharmaceutical and veterinary fields that require cleaning with aqueous detergents prior to reuse. It particularly comprises surgical instruments, endoscopic equipment and echography probes, for example, transoesophageal probes.

The invention now will be described using non-limiting embodiments of the invention.

### EXAMPLES

List of abbreviations:
- ACL: N-acetylcaprolactam;
- DPM: dipropylene glycol monomethyl ether (Arcosolv^{®} DPM);
- DPnB: dipropylene glycol mono-n-butyl ether (Arcosolv^{®} DPnB);
- PnB: monopropylene glycol mono-n-butyl ether (Arcosolv^{®} PnB);
- TPM: tripropylene glycol monomethyl ether (Dowanol^{®} TPM);
- PM1: 1-methoxy-2-propanol (methoxypropanol).

### EXAMPLE 1: influence of the organic solvent on the stability of the N-acetylcaprolactam

Four liquid acetyl radicals generator compositions according to the invention composed of N-acetylcaprolactam and a propylene glycol ether (I1 - I5) were prepared and compared to an acetyl radicals generator composition according to WO 00/53011 A1 composed of N-acetylcaprolactam and of isopropanol (EC). The formulae of various compositions are provided in table 1 below.

**Table 1**

| **Composition (% by weight/total weight)** | **I1** | **I2** | **I3** | **I4** | **I5** | **EC1** |
|---|---|---|---|---|---|---|
| N-actvlcaprolactam | 60 | 60 | 60 | 60 | 60 | 60 |
| Isopropanol | | | | | | 40 |
| DPM | 40 | | | | | |
| PM1 | | 40 | | | | |
| DPnB | | | 40 | | | |
| PnB | | | | 40 | | |
| TPM | | | | | 40 | |

The stability of the N-acetylcaprolactam in the various compositions was assessed using an accelerated ageing test at 50 °C. Sample preservation conditions: 250 ml glass bottle, Bakelite plug placed in an oven set to a temperature of 50 °C without controlled hygrometry.

The test results are summarized in table 2 below.

**Table 2**

| | | **ACL content (% by weight relative to the total weight)** | | | | |
|---|---|---|---|---|---|---|
| | **I1** | **I2** | **I3** | **I4** | **I5** | **EC** |
| **T0 days 50 °C** | 60 | 60 | 60 | 60 | 60 | 60 |
| **T7 days 50 °C** | 59.76 | 59.91 | 60.29 | 60.09 | 60.99 | 56.49 |

These results clearly show that the use of a propylene glycol ether allows the stability of the acetyl radicals generator composition to be increased compared to a composition according to WO 00/53011 A1 (EC).

### EXAMPLE 2: stability of various liquid acetyl radicals generator compositions

Eight liquid acetyl radicals generator compositions (I6 - I13) according to the invention were prepared and their stability assessed and compared to a composition with isopropanol (EC). Their compositions are provided in table 3.

| | **Table 3** | | | | | | | |
|---|---|---|---|---|---|---|---|---|
| **Composition (% by weight/total weight)** | | **EC2** | **I6** | **I7** | **I8** | **I9** | **I10** | **I11** |
| Isopropanol | | 30.3 | | | | | | |
| Benzotriazole | | 3.7 | 3.7 | | 3.7 | | 3.7 | |
| Genapol EP 2584 | | | | | | | | |
| Coloring agent | | | | | | | | |
| N-acetylcaprolactam | | 60 | 60 | 60 | 60 | 60 | 60 | 60 |
| DPM | | | | | | | 30.3 | 34 |
| DPnB | | | 30.3 | 34 | | | | |
| PnB | | | | | | | | |
| TPM | | | | | | | | |
| PM1 | | | | | 30.3 | 34 | | |

| **Composition (% by weight/total weight)** | | | **I12** | **I13** | **I14** | **I15** | | |
|---|---|---|---|---|---|---|---|---|
| Isopropanol | | | | | | | | |
| Benzotriazole | | | 3.7 | | 3.7 | | | |
| Genapol EP 2584 | | | | | | | | |
| Coloring agent | | | | | | | | |
| | | N-acetylcaprolactam | 60 | 60 | 60 | 60 | | |
| | | DPM | | | | | | |
| | | DPnB | | | | | | |
| | | PnB | 30.3 | 34 | | | | |
| | | TPM | | | 30.3 | 34 | | |
| | | PM1 | | | | | | |

The stability of the N-acetylcaprolactam in the various compositions was assessed using the accelerated ageing test at 50 °C described in example 1. The test results are summarized in table 4 below.

| | **Table 4** | | | | | | | |
|---|---|---|---|---|---|---|---|---|
| | | **ACL content (% by weight relative to the total weight)** | | | | | | |
| | | **EC2** | **I6** | **I7** | **I8** | **I9** | **I10** | **I11** |
| **T0 days 50 °C** | | 60 | 60 | 60 | 60 | 60 | 60 | 60 |
| **T7 days 50 °C** | | 50.1 | 53.8 | 59.4 | 54.91 | 59.06 | 53.25 | 59.55 |
| **T15 days 50 °C** | | 44.9 | 49.7 | 58.3 | 51.71 | 58.53 | 49.23 | 58.20 |

| | **ACL content (% by weight relative to the total weight)** | | | | | | | |
|---|---|---|---|---|---|---|---|---|
| | **I12** | **I13** | **I14** | **I15** | | | | |
| **T0 days 50 °C** | 60 | 60 | 60 | 60 | | | | |
| **T7 days 50 °C** | 53.29 | 59.79 | 53.37 | 60.18 | | | | |
| **T15 days 50 °C** | 50.34 | 59.00 | 51.48 | 59.92 | | | | |

These results show that all the compositions according to the invention have improved stability over time compared to the sample containing isopropanol (EC2) and thus an acceptable shelf life (lifetime). When the composition does not contain benzotriazole, its stability is further improved. The best result is obtained for the composition with TPM.

### EXAMPLE 3: assessment of the microbiological activity of a disinfectant composition prepared with an acetyl radicals generator composition according to the invention

A disinfectant composition was prepared by mixing 100 g of a hydroxyl radicals generator composition comprising (3.0 % hydrogen peroxide, 0.05 % sodium perborate tetrahydrate and 0.0075 % Dequest 2066 (Italmatch Chemicals), with the percentages being expressed by weight relative to the total weight of the hydroxyl radicals generator composition), with 0.82 g of the composition I15 being assessed for its microbiological performance against various strains in clean conditions according to the standards listed in table 5, with a contact time of 5 minutes. For comparison purposes, the same tests were performed with Anioxyde^{®} 1000 solution prepared according to the instructions.

**Table 5**

| | | | **Microbial reduction** | | |
|---|---|---|---|---|---|
| **Standard** | **Strain** | **Invention** | | **Anioxyde^{®} 1000** | |
| EN 13727+A2 (December 2015) | Pseudomonas aeruginosa | | > 5 Log | | > 5 Log |
| | Staphylococcus aureu | | > 5 Log | | > 5 Log |
| | Enterococcus hirae | | > 5 Log | | > 5 Log |
| EN 14348 (June 2015) | Mycobacterium terrae | | > 4 Log | | > 4 Log |
| | Mycobacterium avium | | > 4 Log | | > 4 Log |
| EN 13624 (November 2013) | Candida albicans | | > 4 Log | | > 4 Log |
| | Aspergillus niger | | > 4 Log | | > 4 Log |
| EN 13704 (April 2002) 5Log | B. subtilis | | > 5 Log | | > 5 Log |
| | B. cereus | | > 5 Log | | > 5 Log |
| EN 14476 + A1 (October 2015) 4Log | Poliovirus | | > 4 Log | | > 4 Log |
| | Adenovirus | | > 4 Log | | > 4 Log |
| | Norovirus | | > 4 Log | | > 4 Log |

These results show that a disinfectant composition prepared on the basis of an acetyl radicals generator composition according to the invention allows a full disinfection spectrum to be obtained in 5 minutes. This performance is the same level as that obtained for the reference product, Anioxyde^{®} 1000.

### The present description pertains in particular to the following items:

1. Liquid acetyl radicals generator composition comprising N-acetylcaprolactam and an organic solvent, characterized in that the organic solvent is selected from propylene glycol ethers.
2. Composition according to item 1, characterized in that the organic solvent is selected from dipropylene glycol monomethyl ether, monopropylene glycol mono-n-butyl ether, dipropylene glycol mono-n-butyl ether (butoxypropanol), tripropylene glycol monomethyl ether and their mixtures.
3. Composition according to item 2, characterized in that the organic solvent is tripropylene glycol monomethyl ether.
4. Composition according to any of the preceding items, characterized in that the N-acetylcaprolactam content is from 30 % to 80 % by weight relative to the total weight of the composition.
5. Composition according to any of the preceding items, characterized in that the solvent content is from 10 % to 60 % by weight relative to the total weight of the composition.
6. Composition according to any of the preceding items, characterized in that it further comprises a non-ionic surfactant.
7. Composition according to any of the preceding items, characterized in that it is benzotriazole free.
8. Kit for preparing a disinfectant composition containing peracetic acid, the kit containing:
   - in a first container, a liquid acetyl radicals generator composition according to any of the preceding claims; and
   - in a second container, a liquid perhydroxyl ions generator composition comprising hydrogen peroxide.
9. Method for preparing a disinfectant composition containing peracetic acid, wherein:
   - an acetyl radicals generator composition is provided according to any of claims 1 to 7;
   - a perhydroxyl ions generator composition is provided comprising hydrogen peroxide;
   - the acetyl radicals generator composition and the perhydroxyl ions generator composition are mixed.
10. Use of a kit according to item 8 for disinfecting surgical and/or medical instruments and equipment.
11. Use of a disinfectant composition prepared according to the method of item 9 for disinfecting surgical and/or medical instruments and equipment.

## Claims

1. A method of generating peracetic acid comprising:
combining N-acetylcaprolactam, an organic solvent, and a liquid perhydroxyl ions generator to form a mixture; wherein the mixture comprises from 30% to 80% N-acetylcaprolactum; wherein the organic solvent comprises a propylene glycol ether; and wherein the mixture is free of aliphatic alcohol;
generating peracetic acid.

2. The method of claim 1, wherein the organic solvent is selected from dipropylene glycol monomethyl ether, monopropylene glycol mono-n-butyl ether (butoxypropanol), dipropylene glycol mono-n-butyl ether, tripropylene glycol monomethyl ether and their mixtures.

3. The method of claim 2, wherein the organic solvent is tripropylene glycol monomethyl ether.

4. The method of any one of the preceding claims, wherein the liquid perhydroxyl ions generator comprises hydrogen peroxide.

5. The method of any of the preceding claims, further comprising including a non-ionic surfactant in the combining step, preferably from 1% to 10% in the mixture.

6. The method of any one of the preceding claims, further comprising including a stabilizing agent and/or anti-corrosion agent in the combining step.

7. The method of claim 6, wherein the stabilizing agent comprises as an alkali hydroxide or an alkanolamine; and wherein the anti-corrosion agent comprises a phosphate, a phosphonate, a phosphoric ester, or a triazole derivative.

8. The method of any of the preceding claims, wherein the mixture is benzotriazole free.

9. The method of any of the preceding claims, wherein the N-acetylcaprolactam and the organic solvent are in a premix.

10. Use of the peracetic acid generated according to any one of claims 1-7, the use comprising disinfecting.

11. The use of claim 10, wherein surgical and/or medical instruments and equipment are disinfected.

12. The use of claim 11, wherein the disinfecting is performed by soaking the surgical and/or medical instruments and equipment.

13. The use of claim 10 or 11, wherein the surgical and/or medical instruments and equipment is medical, dental, pharmaceutical and/or veterinary instruments and equipment.

14. The use of any one of claims 10-13, wherein a microbial population is reduced by greater than 4 Log.

15. The use of claim 14, wherein the microbial population comprises *Pseudomonas aeruginosa, Staphylococcus aureu, Enterococcus hirae, Mycobacterium terrae, Mycobacterium avium, Candida albicans, Aspergillus niger, B. subtilis, B. cereus,* Poliovirus, Adenovirus, and/or Norovirus.
